# EUROPEAN PATENT APPLICATION

(11) **EP 1 026 622 A2**
(43) Date of publication of application: **09.08.2000**
(21) Application number: 00102435.5
(22) Date of filing: 04.02.2000
(51) Int. Cl.: G06K 17/00, G06K 13/00

(54) **Bankbook reading/writing apparatus**

(30) Priority: 08.02.1999 JP 3062899
(71) Applicant: KABUSHIKI KAISHA SANKYO SEIKI SEISAKUSHO, Suwa-gun Nagano-ken (JP)
(72) Inventor: Mizuno, Mamoru, c/o Sankyo Seiki Seisakusho K.K., Suwa-gun, Nagano (JP); Iizawa, Motohiro, c/o Sankyo Seiki Seisakusho K.K., Suwa-gun, Nagano (JP)
(74) Representative: Grünecker, Kinkeldey, Stockmair & Schwanhäusser Anwaltssozietät

(57) **Abstract**

Teeth of a transfer belt are faced outward at a side of a magnetic head. A driving gear is arranged between a plurality of driven rollers so as to increase a winding angle of the transfer belt with respect to the driving gear. There is further provided on a face of the transfer belt at a teethed side a dustproof member which runs together with the transfer belt. The dustproof member is bridgingly stretched between the driven rollers but not wound around the driving gear.

## Description

### BACKGROUND OF THE INVENTION

The present invention relates to a bankbook reading/writing apparatus for conducting recording and reproducing of magnetic data on a magnetic recording face of the bankbook, and more particularly to an improvement of a head transporting mechanism in the bankbook reading/writing apparatus and a protection for the same.

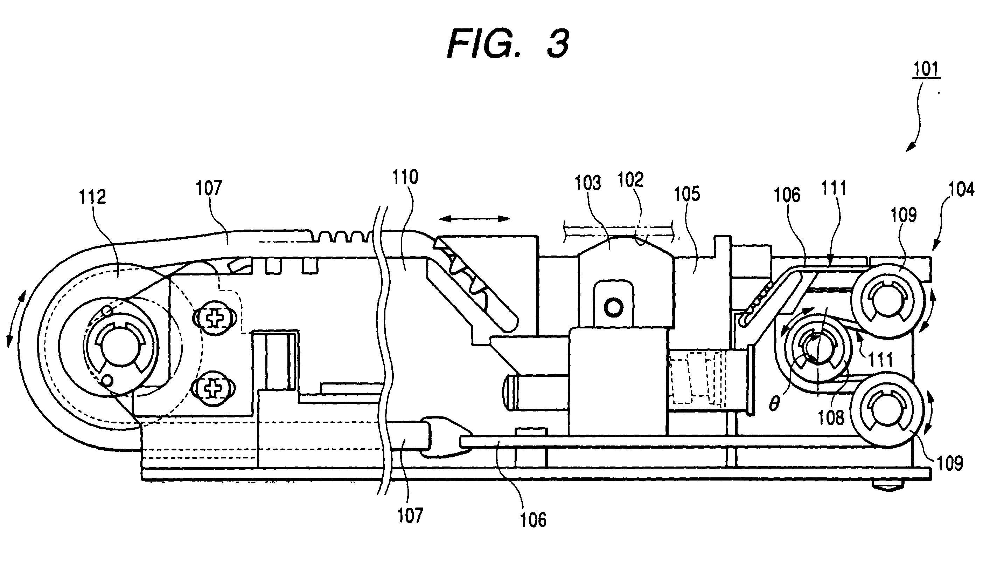

As shown in Fig. 3, a related bankbook reading/writing apparatus 101 is provided with a head transporting mechanism 104 which is adapted to effect linear transporting of a magnetic head 103 for conducting recording and reproducing of magnetic data on a magnetic recording face 102 of the bankbook. Such a head transporting mechanism 104 comprises, for example, an annular flat belt consisting of a teethed transfer belt 106 and a shutter belt 107 provided on both sides of a head holder 105 for holding the magnetic head 103 in a moving direction of the head holder 105. This flat belt is wound around a driving gear 108, driven rollers 109 and a large driven roller 112 to rotate the driving gear 108 in a positive or reverse rotation thereby to reciprocally and linearly transport the magnetic head 103 along a frame 110.

In such head transporting mechanism 104, in order to secure an sufficient winding angle θ of the transfer belt 106 with respect to the driving gear 108, this driving gear 108 is located closer to an interior of the mechanism from the driven rollers 109 which are disposed upward and downward. In this case, the transfer belt 106 which is provided with teeth 111 on its one face is wound with the teeth 111 faced outward of the mechanism so that the teeth 111 can be faced inward so as to mesh with teeth of the driving gear 108, only when the transfer belt 106 travels between the driven rollers 109.

However, in such head transporting mechanism 104, since the teeth 111 of the transfer belt 106 are faced upward between the head holder 105 and one of the driven rollers 109, there would be occurred that dust may adhere to surfaces of the teeth. For example, when the transfer belt 106 passes just below the magnetic recording face 102 of the bankbook, the magnetic recording face 102 introduces dust due to a contact with the magnetic head 103 which may adhere to the teeth surfaces. In such a case, there would be arose an irregular running speed and a strange noise.

On the other hand, the shutter belt 107 which is in association with the transfer belt 106 is formed broader than a width of an interval between a pair of frames 110 in order to prevent an intrusion of dust into the mechanism. When a lower face of the belt 107 slidingly contacts the frame 110, there occurs a problem that sliding resistance will be increased, especially in case that the belt 107 is formed of rubber material. Moreover, when a rubber face has changed with repeated sliding movements, abrasion resistance will also change which may cause an irregular running speed of the magnetic head 103.

### SUMMARY OF THE INVENTION

Therefore, an object of the invention is to provide a bankbook reading/writing apparatus in which the adhesion of dust on the face of the transfer belt on which the teeth are provided will be avoided. A further object of the invention is to prevent an occurrence of the irregular running speed which is caused by the contact of the shutter belt with the frames.

### BRIEF DESCRIPTION OF THE DRAWINGS

In the accompanying drawings:
Fig. 1 is a side view showing a bankbook reading/writing apparatus according to one embodiment of the present invention;
Fig. 2 is a front view of the bankbook reading/writing apparatus showing in Fig. 1; and
Fig. 3 is a side view showing a related bankbook reading/writing apparatus.

### DETAILED DESCRIPTION OF THE PREFERRED EMBODIMENT

Now, a construction of the invention will be described in detail referring to one embodiment of the invention as shown in the drawings.

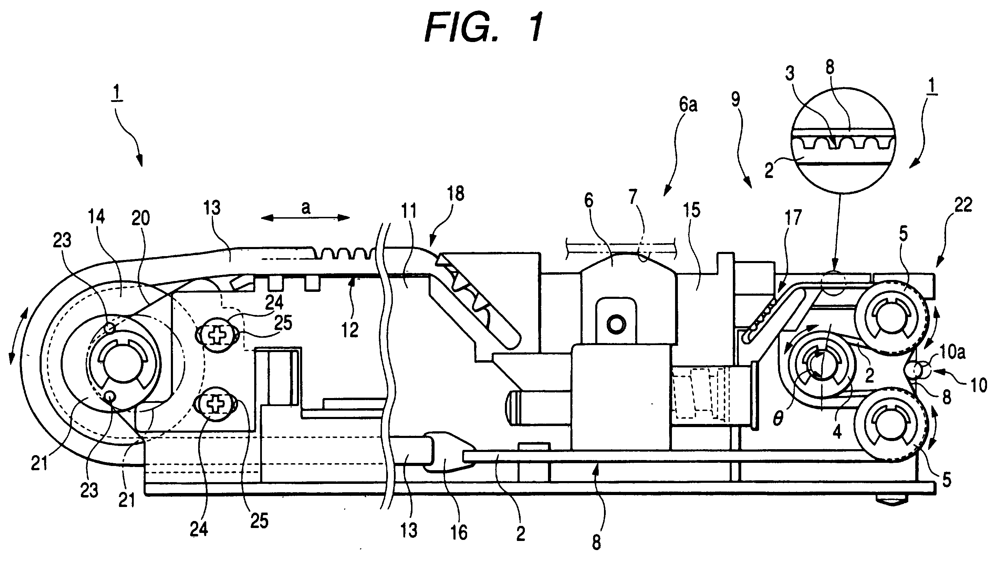

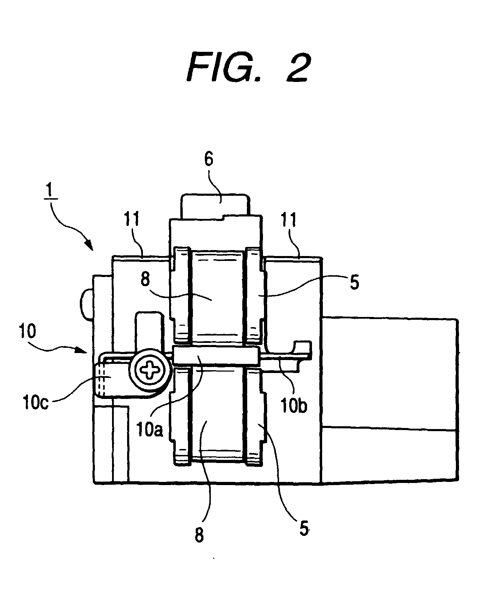

Figs. 1 and 2 show one embodiment of a bankbook reading/writing apparatus according to the invention. The bankbook reading/writing apparatus 1 has a head transporting mechanism 22 which includes a transfer belt 2 provided with teeth 3 and wound around a driving gear 4 and a plurality of (two in this embodiment) driven rollers 5, and which is adapted to reciprocally transport a magnetic head 6 by means of the transfer belt 2 thereby to conduct recording and reproducing on a magnetic recording face 7 formed on the bankbook. In this embodiment, the teeth 3 of the transfer belt 2 are positioned outside at a side of the magnetic head 6 and the driving gear 4 is located between a plurality of the driven rollers 5 in order to increase the winding angle θ of the transfer belt 2 with respect to the driving gear 4. Further, a dustproof member 8 is mounted on the transfer belt 2 at the face provided with the teeth 3 so as to move together with the transfer belt 2. The dustproof member 8 is not wound around the driving gear 4, but bridgingly stretched between the driven rollers 5.

Now, constructions of components of the bankbook reading/writing apparatus 1 will be respectively explained hereunder. Two types of flat belts composing a single annular belt is wound between the driven rollers 5 which are arranged at one side end 9 of the magnetic head 6 and a large driven roller 14 arranged at the other side end thereof. The two types of the flat belts in this case, includes the transfer belt 2 provided with the teeth 3 on one hand, and the shutter belt 13 on the other hand. Respective ends of the belts 2 and 13 are connected to a head holder 15 for holding the magnetic head 6 and a connecting member 16 thereby to form an annular shape in general as a part of an endless belt. In this way, the two belts 2 and 13 constitute a part of a head transporting mechanism 22 which reciprocally transports the magnetic head 6. The head holder 15 and both the belts 2 and 13 are fastened together, for example, by inserting respective ends of the belts into diagonal retaining grooves 17 and 18 which are formed at both ends of the head holder 15 and provided with engaging projections. Preferably, a teethed timing belt or so may be employed as the shutter belt 13 as well as the transfer belt 2, but this is not particularly restricted.

The transfer belt 2, though not specifically illustrated, is relatively narrower than a distance of a guide part composed of edges of left and right frames 11 of the head holder 15, and wound around the small driven rollers 5 on the driven side and the driving gear 4. On the other hand, the shutter belt 13 which is wound around the large driven roller 14 on the driven side is larger in width than the distance of the guide part so as to cover an interior of the bankbook reading/writing apparatus 1 and also acts as a shutter for preventing an intrusion of foreign material.

The two belts 2 and 13 are connected by means of the connecting member 16 to form the endless annular body composed of the head holder 15, the belts 2 and 13 and the connecting member 16. Actuator such as a motor or the like (not shown) adapted to make positive and reverse rotations move the head holder 15 and the magnetic head 6 along the guide part reciprocally movably in a linear transporting, so that the magnetic head 6 can smoothly move in one direction by receiving a tension in this direction, whichever direction the head holder 15 and the magnetic head 6 may be moved. However, the method of mounting the belts 2 and 13 is not limited to the described method. For example, a belt which has been originally formed in an endless annular shape and is a flat plate in cross section may be wound around the driven rollers 5 at the one side end 9 and the driven roller 14 at the other side end, and the head holder 15 may be mounted on the flat plate-like belt afterward.
The two driven rollers 5 are provided with flanges and ball bearings, for example, respectively so as to freely rotate while guiding the transfer belt 2, and arranged upward and downward at the one side end 9 of the magnetic head 6. The driven rollers 5 are fixed to the frame 11 so as to support the transfer belt 2 by always applying an appropriate tension in such a manner that the transfer belt 2 is stretched. Between the driven rollers 5 which are arranged upward and downward in this way, is arranged the driving gear 4 at a position close to the magnetic head 6 so as to form a regular triangle with the two driven rollers 5, in an opposite relation to a winding direction of the driven rollers. In this case, the driven rollers 5 are arranged relatively close to each other as shown in Fig. 1 so that the sufficient winding angle θ with respect to the driving gear 4 can be secured at the time when the transfer belt 2 is wound therearound. The driving gear 4 is provided with teeth on its peripheral face to be engaged with the teeth 3 of the transfer belt 2 so that an actuating force of the actuator such as the motor can be transmitted without sliding.

The above described transfer belt 2 which is provided with the teeth 3 adapted to mesh with the teeth on the driving gear 4 is wound around the two driven rollers 5 with its teeth 3 faced outward, and is wound around the driving gear 4 with the teeth 3 faced inward. In this situation, the transfer belt 2 is wound around the driving gear 4 in generally U-shape assuring the sufficient winding angle θ.

Moreover, in the bankbook reading/writing apparatus 1 in this embodiment, further outside of the transfer belt 2 which is wound in a state that the teeth 3 are faced outward, there is mounted in an overlapped manner a dustproof member 8 for protecting the teeth 3 from dust. In this embodiment, the dustproof member 8 is formed of a belt-like film, for example, whose opposite ends are respectively connected to the head holder 15 of the magnetic head 6 and the connecting member 16. However, the material of the dustproof member 8 is not limited, as far as the dustproof member 8 is a thin member having a flexibility to flex along the driven rollers 5 and a durability.

On this occasion, the dustproof member 8 is bridgingly wound from the one driven roller 5 directly to the other driven roller 5 as shown in Fig. 1 so as not to be entangled by the driving gear 4, so that the dustproof member 8 may not enter between the transfer belt 2 and the driving gear 4. For this reason, the dustproof member 8 is made shorter than the transfer belt 2 by a length corresponding to a length of the transfer belt 2 wound around the driving gear 4.

In addition, a tension member 10 is provided between the driven rollers 5 to apply a tension to the dustproof member 8. As shown in Fig. 1, this tension member 10 serves to apply the tension to press the dustproof member 8 toward the driving gear 4 between the driven rollers 5. The tension member 10 in this embodiment as shown in Fig. 2 consists of a roller member 10a having a length covering a full length of the dustproof member 8, and a support member 10b formed of an L-shaped bar spring which rotatably support the roller member 10a. The support member 10b is fixed at its one end to the frame 11 sidewardly by means of a cantilever press member 10c in a hook shape. The tension member 10 is simply constructed in this way, and can easily conduct a tension control and so on.

On the other hand, the large driven roller 14 is rotatably supported by a roller support member 20 which is movable in a direction A in which the belt is wound, so that the large driven roller 14 can move in the belt winding direction A with respect to the frame 11. Moreover, an eccentric member 21 is provided between the frame 11 and the roller support member 20 in order to adjust a position of the belt winding direction A of the roller support member 20. The eccentric member 21 enables a rotation angle to be adjusted utilizing two openings 23.

This roller support member 20 rotatably supports a rotary shaft of the large driven roller 14 as shown in Fig. 1 and is mounted on the frame 11 so as to be movable in the belt winding direction A guided by engagements of fixing screws 24 with elongated holes 25 in the frame 11. Accordingly, this roller support member 20 can be fastened to the frame 11 at desired positions so that tension acting on the shutter belt 13 can be adjusted. In this embodiment, the fixing screws 24 as shown in Fig. 1 are employed as fastening member, but the fastening member are not necessarily limited to the described ones. The elongated holes 25 which are formed at positions corresponding to the fixing screws 24 of the frame 11 allow a travel of the roller support member 20 in the belt winding direction A by a distance corresponding to a length of the hole.

In the bankbook reading/writing apparatus 1 in this embodiment, the frame 11 in which the magnetic head 6 moves is provided with a gap 12 in which the magnetic head 6 can move. This gap 12 is defined by a slight gap which is formed between the shutter belt 13 and the frame 11. The space 12 need not be a large space particularly, but is preferably provided in such a manner that any portion of the shutter belt 13 formed of rubber, for example, may not contact with the frame 11 in an entire range in which the magnetic head 6 travels. Because such gap 12 is provided in this embodiment, the shutter belt 13 covers the gap 12 in a state where the shutter belt 13 is separated from the frame 11 by a size of this gap at an original position 6a of the magnetic head 6 before it travels.

The bankbook reading/writing apparatus 1 which is constructed as above is operated as follows;

In this embodiment, the original position 6a of the magnetic head 6 is set close to the above mentioned one side end 9 which is a waiting position of the bankbook reading/writing apparatus 1. When the bankbook is inserted into the reader/writing apparatus 1 and has reached the determined position, the actuator is operated to move the magnetic head 6 in the belt winding direction A.

On this occasion, the transfer belt 2 is fed from the driven roller 5 around which the belt 2 is wound to the driving gear 4 and further to the other driven roller 5, while the dustproof member 8 for protecting these driven members 5 is fed from the one driven roller 5 to the other driven roller 5 by way of the tension member 10. Accordingly, the dustproof member 8 is overlapped on the transfer belt 2 between the connecting member 16 and the driven roller 5 and between the other driven roller 5 and the head holder 15, but the dustproof member 8 and the transfer belt 2 are fed through separate paths between both the driven rollers 5.

In this manner, the bankbook reading/writing apparatus 1 in the described embodiment is provided with the dustproof member 8 which runs together with the face of the transfer belt 2 which is provided with the teeth 3 in the overlapped manner on the face. Therefore, adhesion of foreign material to the face of the belt 2 provided with the teeth 3 will be prevented, and occurrence of irregular running speed and strange noises can be eliminated. Further, the transfer belt 2 and the dustproof member 8 are fed separately between the two driven rollers 5, and so, engagements of the teeth 3 of the transfer belt 2 with the teeth of the driving gear 4 can be secured. Thus there will be no trouble in operation.

In this bankbook reading/writing apparatus 1, the tension is applied to the dustproof member 8 by means of the tension member 10, which can eliminate possibility that the dustproof member 8 may be slackened during operation. Further, the tension of the transfer belt 2 can be adjusted or a change in the length of the transfer belt 2 with a change of the path can be controlled. In this case, moreover, since the dustproof member 8 is applied with the tension in a direction where the winding angles with respect to the driven rollers 5 become larger, a stable running can be realized.

Because the gap 12 is provided between the shutter belt 13 and the frame 11 in this embodiment, a rear face of the shutter belt 13 will not contact the frame 11. By this arrangement, only the head holder 15 contacts the frame 11 to decrease the sliding resistance, and the speed will be less changed even when the magnetic head 6 is transported repeatedly.
Although the above described embodiment is one example of the preferred embodiments of the invention, the invention is not limited to the embodiment, but there are available various modifications within a scope which does not deviate from a concept of the invention. For example, though this embodiment has been described with the belt having the teeth 3 as the transfer belt 2, a flat belt which is not provided with the teeth 3 can be used as the transfer belt 2 on the driving side. In this case too, intrusion and adhesion of dust can be prevented by covering the transfer belt 2 with the dustproof member 8.

In this embodiment, the rotatable roller member has been described as the tension member. However, the tension member can be realized by providing an elastic member such as a spring.

In this embodiment, the head transporting mechanism 22 has been described as the bankbook reading/writing apparatus 1. However, the invention is not limited to this embodiment but can be widely applied to other apparatus. Therefore, although the magnetic head 6 employed in this embodiment is so constructed as to contact the magnetic recording face 7 formed on the bankbook, it is needless to say that the invention is not limited to such an application, but the head transporting mechanism 22 constituting the invention can be put in practice in other types of reader and writers or the like.

As apparent from the above description, according to the present invention, there is provided the dustproof member which runs together with the transfer belt on the face carrying the teeth. Accordingly, adhesion of foreign material to the teethed face of the belt can be prevented, to avoid occurrence of irregular running speed or strange noises. Further, since the dustproof member is fed through the separate route between the two driven rollers, no trouble will occur in operation.

According to the present invention, since the tension member is provided so that the dustproof member may not be slackened during operation. Therefore, the tension of the transfer belt can be adjusted and the change in the length of the transfer belt can be also controlled.

According to the present invention, there is provided the space in which the magnetic head can be transported between the shutter belt and the frame. Therefore, the shutter belt acts as a shutter for covering the space for protecting the interior of the mechanism. In addition the shutter belt can also run in such a state that it is separated from the frame thereby to reduce or eliminate the sliding resistance with the frame, and thus occurrence of the irregular running can be prevented.

According to the present invention, because the tension member includes the rotatable roller member supported in a cantilever manner, which simplifies the structure and facilitates the adjustment of the tension.

Although the present invention has been shown and described with reference to specific preferred embodiments, various changes and modifications will be apparent to those skilled in the art from the teachings herein. Such changes and modifications as are obvious are deemed to come within the spirit, scope and contemplation of the invention as defined in the appended claims.

## Claims

1. A bankbook reading/writing apparatus for recording/reproducing data on a magnetic recording face provided on a bankbook, comprising:
a magnetic head for conducting the recording/reproduction of data;
a first transfer belt connected to the magnetic head for transferring the head on the magnetic recording face reciprocally;
tooth members formed on one side of the first transfer belt;
a drive gear for engaging with the tooth members to reciprocally feed the first transfer belt;
a plurality of driven rollers for reciprocally feeding the first transfer belt wound thereon such that the tooth members face outward, respectively;
a dustproof member fed by the driven rollers together with the first transfer belt while covering the tooth members but without being wound on the drive gear.

2. The bankbook reading/writing apparatus as set forth in claim 1, further comprising:
a tension member for providing a tension onto the dustproof member situating between the first and the second rollers.

3. The bankbook reading/writing apparatus as set forth in claim 2, wherein the tension member is a roller member which is rotatably supported in a cantilevered manner.

4. The bankbook reading/writing apparatus as set forth in claim 1, further comprising:
a second transfer belt connected to the magnetic head so as to be extended in an opposed direction of which the first transfer belt extends for moving the magnetic head in cooperation with the first transfer belt;
a roller member on which the second transfer belt is wound;
a support member for supporting the roller member; and
an adjuster for sliding the roller member in a direction of which the second transfer belt extends to adjusting tension applied to the second transfer belt.

5. A bankbook reading/writing apparatus for recording/reproducing data on a magnetic recording face provided on a bankbook, comprising:
a magnetic head for conducting the recording/reproduction of data;
a first transfer belt connected to the magnetic head for transferring the head on the magnetic recording face reciprocally;
tooth members formed on one side of the first transfer belt;
a drive gear for engaging with the tooth members to reciprocally feed the first transfer belt;
a plurality of driven rollers for reciprocally feeding the first transfer belt wound thereon such that the tooth members face outward, respectively;
a second transfer belt connected to the magnetic head so as to be extended in an opposed direction of which the first transfer belt extends for moving the magnetic head in cooperation with the first transfer belt;
a roller member on which the second transfer belt is wound;
a head holder for holding the magnetic head while engaging the first transfer belt and the second transfer belt; and
a frame for guiding the magnetic head through the head holder so as to be able to move on the magnetic recording face reciprocally,
wherein a position where the second transfer belt is taken off the roller member and a position where the second transfer belt engages with the head holder are arranged so as to provide a gap between a top face of the frame and the second transfer belt.

6. A bankbook reading/writing apparatus for recording/reproducing data on a magnetic recording face provided on a bankbook, comprising:
a magnetic head for conducting the recording/reproduction of data;
a first transfer belt connected to the magnetic head for transferring the head on the magnetic recording face reciprocally;
a first roller and a second roller for reciprocally feeding the first transfer belt wound thereon such that a first surface of the first transfer belt faces outward, respectively;
a third roller disposed between the first and the second rollers for reciprocally feeding the first transfer belt wound thereon such that a first surface of the first transfer belt faces inward;
a dustproof member fed by the first and the second rollers without being brought into contact with the third roller so as to cover the first surface of the first transfer belt except a portion where the dustproof member situates between the first and the second rollers.
